Europäisches Patentamt

European Patent Office

Office européen des brevets

(19)

(11) Veröffentlichungsnummer : **0 383 421 B1**

(12)
# EUROPÄISCHE PATENTSCHRIFT

(45) Veröffentlichungstag der Patentschrift :
**22.12.93 Patentblatt 93/51**

(51) Int. Cl.⁵ : **F16N 7/38,** F16N 29/02,
B60R 17/02

(21) Anmeldenummer : **90250048.7**

(22) Anmeldetag : **14.02.90**

(54) **Zentralschmieranlage.**

(30) Priorität : **16.02.89 DE 3904953**

(43) Veröffentlichungstag der Anmeldung :
**22.08.90 Patentblatt 90/34**

(45) Bekanntmachung des Hinweises auf die
Patenterteilung :
**22.12.93 Patentblatt 93/51**

(84) Benannte Vertragsstaaten :
**AT BE DE ES FR GB IT NL SE**

(56) Entgegenhaltungen :
**EP-A- 0 205 905
GB-A- 1 454 184
GB-A- 2 155 417
PATENT ABSTRACTS OF JAPAN vol. 8, no.
100 (M-295)(1537) 11 Mai 1984, & JP-A-59 13194
(KOMATSU) 23 Januar 1984,
Drops A-Katalog "Zentralschmierung für
kleine und mittlere Maschinen", 418-3/87-
7174782-Neue, Mailand; US-A-3463268; US-
A-4537285**

(73) Patentinhaber : **Willy Vogel AG
Motzener Strasse 35/37
D-12277 Berlin (DE)**

(72) Erfinder : **Meuer, Johannes, Dipl.-Ing.
Selbitzer Strasse 104
D-1000 Berlin 22 (DE)**
Erfinder : **Nemack, Christian, Dipl.-Ing.
Karwendelstrasse 29d
D-1000 Berlin 45 (DE)**
Erfinder : **Stockhammer, Raimund
Köhlerstrasse 44
D-1000 Berlin 45 (DE)**
Erfinder : **Todtenhaupt, Dieter
Hohenzollerndamm 24
D-1000 Berlin 31 (DE)**

(74) Vertreter : **Böning, Manfred, Dr. Ing. et al
Patentanwälte Dipl.-Ing. Dieter Jander Dr. Ing.
Manfred Böning Leistikowstrasse 2
D-14050 Berlin (DE)**

## Beschreibung

Die Erfindung betrifft eine Zentralschmieranlage, insbesondere für Nutzfahrzeuge, mit einem Schmiermittelbehälter, einem einen Elektromotor und eine Pumpe aufweisenden Pumpenaggregat, einem Pausen- und Laufzeiten des Pumpenaggregates steuernden Steuergerät, einem mit dem Steuergerät zusammenwirkenden, den einwandfreien Betrieb der Anlage überwachenden Drucksensor, einem Druckbegrenzungsventil sowie mit Schmiermittelleitungen, durch die Schmierfett zu unterschiedlich weit vom Pumpenaggregat entfernten Schmierstellen zugeordneten Schmierstoffverteilern förderbar ist. Eine Schmieranlage dieser Gattung ist aus dem Katalog "Zentralschmierung für kleine und mittlere Maschinen", 418-3/87-7174782-Neue, Seite 35, der Firma Drops A, Mailand, bekannt.

Zentralschmieranlagen der vorstehenden Art werden in erheblichem Umfang insbesondere in moderne Nutzfahrzeuge eingebaut. Sie sind regelmäßig als Verbrauchsschmieranlagen konzipiert und mit sogenannten Einleitungsverteilern nach DIN 24 271 ausgerüstet. Durch das Steuergerät der jeweiligen Anlage wird deren Pumpenaggregat in bestimmten, vom Benutzer einstellbaren Zeitabständen angetrieben, um Schmierfett in die Schmiermittelleitungen zu drücken. Dabei werden Dosierkolben von in üblicher Weise als Nachschmierverteiler ausgebildeten Schmierstoffverteilern durch ein ihrer Dosiergröße entsprechendes Schmierstoffvolumen vorgespannt, d.h. gegen die Kraft einer Feder in einem ihnen zugeordneten Zylinder verlagert. Sobald die Dosierkolben sämtlicher Verteiler vorgespannt sind und ein bestimmter Wert des Druckes in der Schmiermittelleitung erreicht ist, signalisiert der Drucksensor dem Steuergerät ein einwandfreies Arbeiten der Anlage. Um auch bei tiefen Temperaturen eine ausreichende Versorgung der Schmierstoffverteiler zu erreichen, arbeitet das Pumpenaggregat bei den bekannten Anlagen während einer fest vorgegebenen, vergleichsweise langen Zeit, wobei die während dieser Laufzeit über das Aufnahmevermögen der Schmierstoffverteiler hinausgehende Schmierstoffmenge nach Erreichen eines oberhalb des Ansprechdruckes des Drucksensors liegenden Druckes über das Druckbegrenzungsventil zurück in den Schmierstoffbehälter gelangt. Nach dem Ende der Pumpenlaufzeit wird der Druck im Verteilungssystem durch ein Entlastungsventil bis auf einen Restdruck abgebaut und das Schmierfett von den unter der Federkrafteinwirkung stehenden Dosierkolben der Verteiler zu den Schmierstellen gefördert.

Dadurch, daß bei den bekannten Zentralschmieranlagen die Pumpenlaufzeit konstant, und zwar hinreichend groß ist, um auch bei ungünstigem Penetrationsverhalten des Schmierstoffs insbesondere im Winterbetrieb eine ausreichende Versorgung der Schmierstellen zu ermöglichen, sind die Gebrauchszeiten der Pumpenaggregate länger als dies beispielsweise bei reinem Sommerbetrieb erforderlich wäre. Mit der Erfindung wird das Ziel verfolgt, die Betriebsdauer einschlägiger Pumpenaggregate für vorgegebene Einsatzzeiten des mit einer Zentralschmieranlage ausgestatteten Fahrzeuges oder anderen Gerätes zu reduzieren. Das aufgezeigte Problem wird erfindungsgemäß dadurch gelöst, daß dem Steuergerät ein Meßgerät zum Erfassen des Anlaufstromes des Elektromotors zugeordnet ist, dessen Signale eine Veränderung der Laufzeit des Pumpenaggregates in Abhängigkeit von der jeweils ermittelten Höhe des Anlaufstromes im Sinne einer Abnahme der Laufzeit mit abnehmendem Anlaufstrom bewirken.

Im Hinblick darauf, daß bei Fahrzeugen, die das Hauptanwendungsgebiet erfindungsgemäßer Anlagen bilden, ca. 90% aller Abschmierfälle in Temperaturbereichen erfolgen, in denen das Penetrationsvermögen des Schmierfettes kurze Laufzeiten des Pumpenaggregates zuläßt, wird der Verschleiß der Pumpe durch die Erfindung spürbar verringert und die Gebrauchsdauer des Pumpenaggregates deutlich erhöht. Hinzu kommt, daß bei einem Bruch in der Hauptleitung der Anlage während des Sommerbetriebes aufgrund der hier verkürzten Pumpenlaufzeit nur äußerst geringe Schmierstoffmengen ungenutzt in die Umgebung gelangen.

Als besonders vorteilhaft erweist es sich, wenn das Steuergerät mit einem Steuerglied versehen ist, das bei hohen Anlaufströmen (Vorliegen niedriger Umgebungstemperaturen) und einer hieraus resultierenden längeren Laufzeit des Pumpenaggregates eine Minderung des Förderstromes der Pumpe bewirkt. Auf diese Weise erreicht man, daß das Schmierfett in den das Pumpenaggregat mit den Schmierstoffverteilern verbindenden Leitungen langsamer als im Normalbetrieb unter Druck gesetzt wird und tatsächlich erst dann, wenn alle Dosierkolben der Schmierstoffverteiler vorgespannt sind, der Druck in der Anlage einen Wert erreicht, der zum Ansprechen des Drucksensors führt und nach weiterem Druckanstieg das Druckbegrenzungsventil wirksam werden läßt. Es wird so vermieden, daß es bei niedrigen Umgebungstemperaturen infolge schlechten Penetrationsverhaltens des Schmierfettes zu einem vorzeitigen Ansprechen des einen einwandfreien Betrieb der Anlage signalisierenden Drucksensors kommt und darüber hinaus die geförderte Schmierstoffmenge infolge des weiter ansteigenden Druckes über das Druckbegrenzungsventil des Pumpenaggregates in den Behälter zurückgelangt, ehe weit entfernte Schmierstoffverteiler voll oder auch nur teilweise mit Schmierstoff versorgt sind. Mit der Minderung des Förderstromes, d.h der pro Zeiteinheit geförderten Schmierstoffmenge, sollte gleichzeitig eine leichte Erhöhung der Laufzeit des Pumpenaggregates einhergehen.

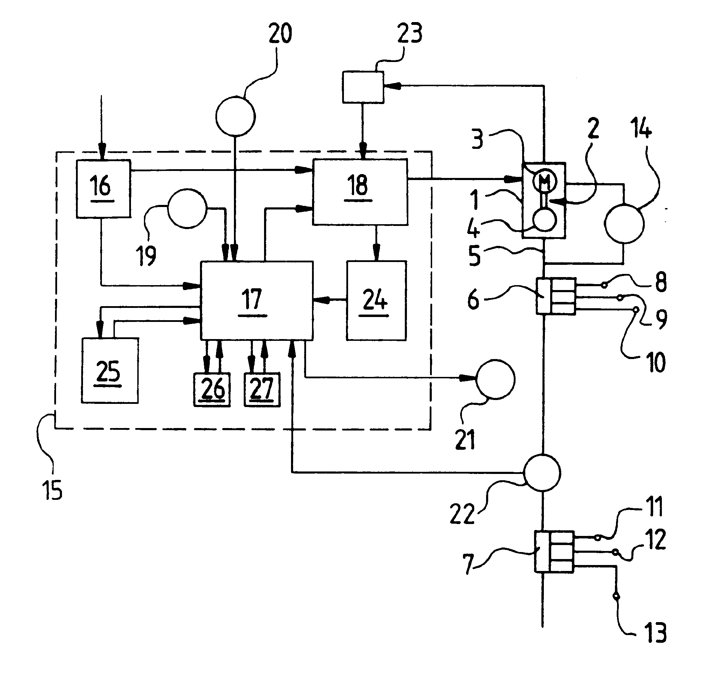

Eine bevorzugte Ausführungsform der Erfindung wird im folgenden anhand des in der beigefügten Zeichnung dargestellten Blockschaubildes näher erläutert.

In der Figur ist ein mit einem Fließfett gefüllter Schmiermittelbehälter 1 mit einem Pumpenaggregat 2, das einen Elektromotor 3 und eine Pumpe 4 aufweist. Die Pumpe 4 des Pumpenaggregates ist über eine Hauptleitung 5 mit mehreren in Reihe geschalteten, als Nachschmierverteiler ausgebildeten Schmierstoffverteilern verbunden, von denen zwei Schmierstoffverteiler 6 und 7 dargestellt sind. Die Schmierstoffverteiler übernehmen die Verteilung dosierter Schmierstoffmengen an diverse Schmierstellen 8 bis 13, wobei die Schmierstofförderung erst nach Beendigung des Pumpenlaufes und Entlastung der Hauptleitung 5 unter der Kraft sogenannter, auf Dosierkolben der Schmierstoffverteiler einwirkender Speicherfedern erfolgt.

14 ist ein Druckbegrenzungsventil, über das während der Laufzeit des Pumpenaggregates 2 gefördertes überschüssiges Schmierfett nach Auffüllen sämtlicher Schmierstoffverteiler zurück in den Schmiermittelbehälter 1 gelangt.

Zur Steuerung der Anlage dient ein Steuergerät 15 mit einem Netzteil 16, das bei Einbau in ein Nutzfahrzeug mit Einschalten der Zündung mit Spannung beaufschlagt wird. Das Netzteil 16 speist einen Mikroprozessor 17 und ein Leistungsteil 18. Dem Mikroprozessor 17 zugeordnet sind ein Pausenzeitwähler 19 und ein Drucktaster 20 für Zwischenschmierungen und die Löschung eventueller Störmeldungen, die durch eine Signalleuchte 21 angezeigt werden, wenn sich in der Hauptleitung 5 nicht ein durch einen Drucksensor 22 überwachter ausreichend hoher Druck einstellt.

Mit dem Leistungsteil 18 ist ein Meßgerät 23 zum Messen des Anlaufstromes des Elektromotors 3 verbunden, dessen Signale über einen Analog/Digitalumwandler 24 zum Mikroprozessor 17 gelangen. Im Mikroprozessor 17 werden die Signale mit in einem Datenspeicher 25 abgespeicherten Daten verglichen, und es wird die Laufzeit des Elektromotors 3 entsprechend dem ermittelten Anlaufstrom festgelegt. Die im Datenspeicher 25 abgespeicherten Daten erhält man aufgrund von Versuchsreihen, mit denen in Abhängigkeit vom jeweils verwendeten Schmierfett Pumpenlaufzeiten ermittelt werden, die bei den jeweiligen, bestimmten Umgebungstemperaturen entsprechenden Anlaufströmen eine Gewähr für eine einwandfreie Abschmierung bieten.

Während der Pumpenlaufzeit erfolgt eine Abfrage des Drucksensors 22. Erreicht der Druck in der Anlage nicht den vorgeschriebenen Wert, signalisiert die nach dem Ende der Laufzeit der Pumpe nicht erlöschende Signalleuchte 21 eine Störung.

In der Praxis finden beim Haupteinsatzgebiet der beschriebenen Zentralschmieranlagen, d.h. beim Einbau in Nutzfahrzeuge, etwa 90% aller Abschmierfälle im Temperaturbereich von -10° bis +75°C und entsprechend niedrigen Anlaufströmen statt, während nur 10% der Abschmierfälle im Temperaturbereich von -10° bis -25°C und entsprechend hohen Anlaufströmen erfolgen. Geht man von einer Abschmierung pro 8-Stunden-Schicht und Zwei-Schicht-Betrieb sowie einer bisher üblichen, auch Winterbedingungen Rechnung tragenden Pumpenlaufzeit von etwa 150 Sekunden aus und verkürzt man diese Pumpenlaufzeit für den Temperaturbereich von -10° bis +75°C um 80%, d.h. um einen Betrag, der sich als vertretbar erwiesen hat, so läßt sich die Gebrauchsdauer der Pumpe etwa verdreifachen, wie dies die nachstehende, von 200 Arbeitstagen und 440 Abschmierungen pro Jahr ausgehende Berechnung zeigt:

Pumpenlaufzeit konstant 150 Sekunden

440 x 150 = 66000 Sekunden = 18,3 Stunden/Jahr.

Pumpenlaufzeit 10%-150 Sekunden; 90%-30 Sekunden

$$440 \times 30 \times 0,9 = 11880 \text{ Sekunden} = 3,3 \text{ Stunden/Jahr,}$$

$$440 \times 150 \times 0,1 = 6600 \text{ Sekunden} = \underline{1,8 \text{ Stunden/Jahr}}$$

$$5,1 \text{ Stunden/Jahr.}$$

Neben der Reduzierung der Gesamtpumpenlaufzeit auf etwa 30% würden bei einem Rohrbruch in 90% aller Schmierfälle lediglich 20% des Schmierfettes in die Umgebung gelangen, das bei herkömmlichen Anlagen aus dem Leitungssystem austreten würde.

Um sicherzustellen, daß auch bei extrem niedrigen Temperaturen sämtliche Schmierstoffverteiler mit Druck beaufschlagt werden, ist das Steuergerät 15 mit zwei Steuergliedern 26 und 27 versehen, von denen das Steuerglied 26 bei Unterschreiten eines bestimmten Anlaufstromes eine Senkung der Drehzahl und das Steuerglied 27 gleichzeitig eine leichte Erhöhung der Laufzeit des Elektromotors 3 bewirken. Durch die Drehzahlabsenkung wird der Förderstrom der Pumpe 4 reduziert. Die Folge ist ein langsamerer, dem schlechteren

EP 0 383 421 B1

Penetrationsverhalten des kalten Schmierfettes Rechnung tragender Druckaufbau im Leitungssystem der Anlage. Es wird so die Gefahr eliminiert, daß sich infolge eines hohen Rohrleitungswiderstandes und der Trägheit des Schmierstoffes einerseits im Hauptleitungsstück bis zum Drucksensor 22 ein Druck aufbaut, der eine einwandfreie Funktion aller Schmierstoffverteiler signalisiert, und andererseits Schmierstoff bei weiter ansteigendem Druck über das Druckbegrenzungsventil 14 vorzeitig zurück in den Schmiermittelbehälter gelangt.

## Patentansprüche

1. Zentralschmieranlage, insbesondere für Nutzfahrzeuge, mit einem Schmiermittelbehälter (1), einem einen Elektromotor (3) und eine Pumpe (4) aufweisenden Pumpenaggregat (2), einem Pausen- und Laufzeiten des Pumpenaggregates (2) steuernden Steuergerät (15), einem mit dem Steuergerät (15) zusammenwirkenden, den einwandfreien Betrieb der Anlage überwachenden Drucksensor (22), einem Druckbegrenzungsventil (14) sowie mit Schmiermittelleitungen (5), durch die Schmierfett zu unterschiedlich weit vom Pumpenaggregat entfernten Schmierstellen (8-13) zugeordneten Schmierstoffverteilern (6,7) förderbar ist, dadurch gekennzeichnet, daß dem Steuergerät (15) ein Meßgerät (23) zum Erfassen des Anlaufstromes des Elektromotors (3) zugeordnet ist, dessen Signale eine Veränderung der Laufzeit des Pumpenaggregates (2) in Abhängigkeit von der jeweils ermittelten Höhe des Anlaufstromes im Sinne einer Abnahme der Laufzeit mit abnehmendem Anlaufstrom bewirken.

2. Zentralschmieranlage nach Anspruch 1, dadurch gekennzeichnet, daß die vom Meßgerät (23) zum Messen des Anlaufstromes gelieferten analogen Signale in digitaler Form einem Mikroprozessor (17) zugeführt werden, in dem durch Vergleich mit in einem Datenspeicher (25) gespeicherten Daten die Laufzeit des Pumpenaggregates (2) in Abhängigkeit von der Höhe des Anlaufstromes festgelegt wird.

3. Zentralschmieranlage nach Anspruch 1, dadurch gekennzeichnet, daß das Meßgerät (23) einen sich nach einer vorgegebenen Einschaltzeit einstellenden Wert des Anlaufstromes mißt.

4. Zentralschmieranlage nach Anspruch 3, dadurch gekennzeichnet, daß die Einschaltzeit bis zur Messung höchstens 1 Sekunde beträgt.

5. Zentralschmieranlage nach einem der Ansprüche 1 bis 4, dadurch gekennzeichnet, daß die Laufzeit des Pumpenaggregates (2) in Stufen veränderbar ist.

6. Zentralschmieranlage nach Anspruch 5, dadurch gekennzeichnet, daß die Laufzeit des Pumpenaggregates (2) in zwei Stufen veränderbar ist, von denen die eine einen normalen Betriebsbereich und die andere einen extrem winterlichen Betriebsbereich abdeckt.

7. Zentralschmieranlage nach einem der Ansprüche 1 bis 6, dadurch gekennzeichnet, daß das Steuergerät (15) mit einem Steuerglied (26) versehen ist, das bei hohen Anlaufströmen und einer hieraus resultierenden längeren Laufzeit des Pumpenaggregates (2) eine Minderung des Förderstromes der Pumpe (4) bewirkt

8. Zentralschmieranlage nach Anspruch 7, dadurch gekennzeichnet, daß zur Minderung des Förderstromes eine Absenkung der Drehzahl des Pumpenaggregates (2) erfolgt.

9. Zentralschmieranlage nach Anspruch 7 oder 8, dadurch gekennzeichnet, daß das Steuergerät (15) mit einem weiteren Steuerglied (27) zur zusätzlichen Erhöhung der Pumpenlaufzeit zwecks Kompensierung der infolge der Minderung des Förderstromes der Pumpe (4) innerhalb einer vorgegebenen Laufzeit von der Pumpe (4) geförderten Mindervolumens versehen ist.

## Claims

1. A centralized lubrication system, especially for commercial vehicles, with a lubricant reservoir (1), a pump assembly (2) comprising an electric motor (3) and a pump (4), a control unit (15) controlling the pause and operating times of the pump assembly (2), a pressure sensor (22) operating in conjunction with the control unit (15) to monitor the proper functioning of the system, a pressure relief valve (14) and with lubricant lines (5) through which lubricant can be fed to lubricant metering devices (6, 7) assigned to lubri-

4

cation points (8-13) at varying distances from the pump assembly, characterised in that a measuring instrument (23) is connected to the control unit (15) to record the starting current of the electric motor (3), with the signals of the measuring instrument (23) eliciting a change in the operating time of the pump assembly (2) in dependence upon the recorded starting current value, with a reduction of the operating time with decreasing starting current.

2. A centralized lubrication system according to Claim 1, characterised in that the analogue signals from the measuring instrument (23) to measure the starting current are fed in digital form to a microprocessor (17), and compared to data stored in a data memory (25), and the operating time of the pump assembly (2) is determined in dependence upon the starting current value.

3. A centralized lubrication system according to Claim 1, characterised in that the measuring instrument (23) measures a starting current obtaining after a predetermined operating time.

4. A centralized lubrication system according to Claim 3, characterised in that the operating time up until measurement is maximally 1 second.

5. A centralized lubrication system according to any one of Claims 1 to 4, characterised in that the operating time of the pump assembly (2) may be changed in stages.

6. A centralized lubrication system according to Claim 5, characterised in that the operating time of the pump assembly (2) can be changed in two stages, of which one covers a normal operating range and the other an extreme winter operating range.

7. A centralized lubrication system according to any one of Claims 1 to 6, characterised in that the control unit (15) is provided with a control element (26) which, in the event of high starting currents and resultant longer operating time of the pump assembly (2), elicits a reduction in the delivery rate of the pump (4).

8. A centralized lubrication system according to Claim 7, characterised in that there is a reduction in the rotational speed of the pump assembly (2) to reduce the delivery rate.

9. A centralized lubrication system according to Claim 7 or Claim 8, characterised in that the control unit (15) is provided with an additional control element (27) for additional increase of the pump operating time to compensate for the reduced volume of lubricant conveyed within a preset operating time of the pump (4) as a result of the reduction in the delivery rate of the pump (4).

## Revendications

1. Système de graissage central, notamment pour véhicules utilitaires, comportant un réservoir de lubrifiant (1), une unité de pompage (2) comportant un moteur électrique (3) et une pompe (4), un appareil de commande (15) qui commande des temps d'arrêt et des temps de marche de l'unité de pompage (2), un capteur de pression (22) qui coopère avec l'appareil de commande (15) et contrôle le fonctionnement parfait du système, une soupape de limitation de pression (14) ainsi que des canalisations (5) pour le lubrifiant, au moyen desquelles la graisse lubrifiante peut être amenée à des distributeurs de lubrifiant (6, 7) associés à des points de graissage (8-13) différemment éloignés de l'unité de pompage, caractérisé en ce qu'à l'appareil de commande (15) est associé un appareil de mesure (23) servant à détecter le courant de démarrage du moteur électrique (3) et dont les signaux déclenchent une modification de la durée de marche de l'unité de pompage (2) en fonction de l'intensité du courant de démarrage, dans le sens d'une réduction du temps de marche lorsque le courant de démarrage diminue.

2. Système de graissage central selon la revendication 1, caractérisé en ce que les signaux analogiques délivrés par l'appareil de mesure (23) pour la mesure du courant de démarrage sont envoyés sous forme numérique à un microprocesseur (17), dans lequel la durée de marche de l'unité de pompage (2) est fixée en fonction de l'intensité du courant de démarrage, par comparaison à des données mémorisées dans une mémoire de données (25).

3. Système de graissage central selon la revendication 1, caractérisé en ce que l'appareil de mesure (23) mesure une valeur du courant de démarrage, qui s'établit au bout d'une durée de branchement prédéterminée.

4. Système de graissage central selon la revendication 3, caractérisé en ce que la durée de branchement jusqu'à la mesure est égale au maximum à 1 seconde.

5. Système de graissage central selon l'une des revendications 1 à 4, caractérisé en ce que la durée de marche de l'unité de pompage (2) peut être modifiée par échelons.

6. Système de graissage central selon la revendication 5, caractérisé en ce que la durée de marche de l'unité de pompage (2) peut être modifiée en deux échelons, dont l'un couvre une gamme normale de fonctionnement et dont l'autre couvre une gamme de fonctionnement dans des conditions hivernales extrêmes.

7. Système de graissage central selon l'une des revendications 1 à 6, caractérisé en ce que l'appareil de commande (15) est équipé d'un organe de commande (26), qui, pour des courants intenses au démarrage et une durée de marche plus longue, qui en résulte, de l'unité de pompage (2), déclenche une réduction du débit de refoulement de la pompe (4).

8. Système de graissage central selon la revendication 7, caractérisé en ce que pour réduire le débit de refoulement, une réduction de la vitesse de rotation de l'unité de pompage (2) est opérée.

9. Système de graissage central selon la revendication 7 ou 8, caractérisé en ce que l'appareil de commande (15) est équipé d'un autre organe de commande (27) servant à accroître de façon supplémentaire la durée de marche de la pompe en vue de compenser le volume réduit entraîné en raison de la réduction du débit de refoulement de la pompe (4), pendant une durée de marche prédéterminée de cette dernière.